# EUROPEAN PATENT APPLICATION

(11) **EP 4 666 885 A1**
(43) Date of publication of application: **24.12.2025**
(21) Application number: 23923079.0
(22) Date of filing: 28.12.2023
(51) Int. Cl.: A24F 40/50, H02J 7/00, A24F 40/46, A24F 40/57, A24F 40/53, A24F 40/51, A24F 40/42, A24F 40/90

(54) **AEROSOL GENERATION DEVICE AND CONTROL METHOD THEREFOR**

(30) Priority: 15.02.2023 KR 20230020130; 19.04.2023 KR 20230051402
(71) Applicant: KT&G Corporation, Daedeok-gu Daejeon 34337 (KR)
(72) Inventor: PARK, Ju Eon, Seongnam-si, Gyeonggi-do 13597 (KR); KIM, Tae Hun, Yongin-si, Gyeonggi-do 16925 (KR); JUNG, Hyung Jin, Seoul 06993 (KR); HAN, Jung Ho, Daejeon 34021 (KR)
(74) Representative: Ter Meer Steinmeister & Partner
(86) International application number: PCT/KR2023/021836
(87) International publication number: WO 2024/172280

(57) **Abstract**

An aerosol generating device includes a heater configured to heat an aerosol generating material, a battery that is rechargeable and configured to supply power to the heater, and a processor configured to control charge of the battery from an external power supply and configured to control an output of the battery to control a temperature of the heater, wherein the processor is further configured to monitor charge-discharge cycles of the battery and control a full charge voltage when charging the battery and the output of the battery, based on the charge-discharge cycles.

## Description

### Technical Field

Various embodiments of the disclosure relate to an aerosol generating device and a control method for the aerosol generating device.

### Background Art

There is an increasing demand for aerosol generating devices that generate aerosols in a non-combustion manner instead of a method of generating aerosols by burning cigarettes. Aerosol generating devices may, for example, generate aerosols from aerosol generating materials in a non-combustible manner and supply the aerosols to users or generate aerosols with flavor by causing a flavor medium, which is generated from an aerosol generating material, to pass therethrough.

In general, rechargeable batteries, such as lithium-ion batteries, may be used as power supplies of aerosol generating devices, and the performance of batteries is important for the reliability and safety of aerosol generating devices.

### Disclosure / Technical Problem

The known aerosol generating devices do not have a function of controlling battery performance regardless of the number or period of uses. As batteries are increasingly used, internal resistances of the batteries increase, resulting in voltage variations and a decrease in battery performance, and the batteries may not be used for the period guaranteed by a battery manufacturer or devices may not be used for the guaranteed number of smoking on one charge, and thus, a user's reliability on a device is reduced. Also, many problems may occur in device stability due to poor battery performance and rapid battery degradation.

Various embodiments of the disclosure not only increase a user's reliability on a device, but also increase efficiency and safety of a battery even when the battery is used for a long period of time, by adjusting a full charge voltage according to the number of charge-discharge cycles of the battery or a use period.

Objects to be achieved by the embodiments are not limited to the objects described above, and objects not described above may be clearly understood by those skilled in the art to which the embodiments belong from the specification and the attached drawings.

Additional aspects are set forth in part in the description which follows and, in part, will be apparent from the description, or may be learned by practice of the embodiments of disclosure.

### Technical Solution

According to an embodiment of the disclosure, an aerosol generating device includes a heater configured to heat an aerosol generating material, a battery that is rechargeable and configured to supply power to the heater, and a processor configured to control charge of the battery from an external power supply and configured to control an output of the battery to control a temperature of the heater, wherein the processor is further configured to monitor charge-discharge cycles of the battery and control a full charge voltage when charging the battery and the output of the battery, based on the charge-discharge cycles.

The processor may be further configured to determine charge of 100 % and discharge of 100 % as one cycle, based on a state of charge (SOC) of the battery and set the full charge voltage to a first voltage that is lower than an initial full charge voltage when a number of cumulated cycles is greater than a first threshold cycle number.

The first threshold cycle number may be less than a number of charge-discharge cycles pre-set by a manufacturer to guarantee performance of the battery.

The aerosol generating device may further include a puff sensor configured to detect a user's puff, wherein the processor may be further configured to monitor the charge-discharge cycles, based on a number of cumulated puffs.

The processor may be further configured to accumulate a number of puffs by reflecting puff characteristic data including puff intensity and puff cycle.

The aerosol generating device may further include a connection terminal configured to detect attachment and detachment of a cartridge storing a preset amount of the aerosol generating material to an accommodation space of the aerosol generating device, wherein the processor may be further configured to count a number of replacements according to the attachment and detachment of the cartridge and monitor the charge-discharge cycles, based on a number of cumulated replacements.

The aerosol generating device may further include at least one temperature sensor from among a temperature sensor configured to detect an ambient temperature of the aerosol generating device and a temperature sensor configured to detect a temperature of the battery, wherein the processor may be further configured to set a charge current when charging the battery to a current that is lower than a preset charge current when a temperature detected by the at least one temperature sensor is lower than a threshold temperature.

The processor may be further configured to set a discharge current when discharging the battery to a current that is lower than a preset discharge current when the temperature detected by the at least one temperature sensor is lower than the threshold temperature.

The aerosol generating device may further include a charge circuit configured to control the charging of the battery, wherein the charge circuit may be further configured to determine a number of cumulated cycles, based on a state of charge of the battery.

The charge circuit may be further configured to adjust at least one of the full charge voltage and a charge current when charging the battery, according to control by the processor.

The processor may be further configured to set the full charge voltage to a second voltage that is lower than the first voltage when the number of cumulated cycles is greater than a second threshold cycle number, which is greater than the first threshold cycle number.

In another embodiment of the disclosure, a control method for an aerosol generating device includes monitoring charge-discharge cycles of a battery, and controlling a full charge voltage when charging the battery and an output of the battery, based on the charge-discharge cycles.

The control method for the aerosol generating device may further include determining charge of 100 % and discharge of 100 % as one cycle, based on a state of charge (SOC) of the battery, and setting the full charge voltage to a first voltage that is lower than an initial full charge voltage when a number of cumulated cycles is greater than a first threshold cycle number.

The first threshold cycle number may be less than a number of charge-discharge cycles pre-set by a manufacturer to guarantee performance of the battery.

According to another embodiment of the disclosure, a recording medium has recorded thereon a program for executing, on a computer, the control method for the aerosol generating device.

### Advantageous Effects

An aerosol generating device according to various embodiments of the disclosure may adjust a full charge voltage and an output current according to the number times or period of charge-discharge of a battery, and thus, efficiency and safety of the battery may be increased even when the battery is used for a long period of time.

Also, a user's reliability on an aerosol generating device may be increased by allowing the user to use the aerosol generating device without decrease in performance of a battery for the number of times of charge-discharge guaranteed by a battery manufacturer.

Also, various problems that may occur due to battery ignition may be solved by increasing efficiency and safety of a battery.

Effects of embodiments are not limited to effects described above, and effects not described may be clearly understood by the skilled person from specification and accompanying drawings.

### Description of Drawings

FIGS. 1 to 3 respectively illustrate examples in which a cigarette is inserted into an aerosol-generating apparatus, according to an embodiment.
FIGS. 4 and 5 respectively illustrate examples of cigarettes according to an embodiment.
FIG. 6 is a block diagram of an aerosol generating device according to one embodiment;
FIG. 7 is a block diagram of functional modules of a processor, of the embodiment of FIG. 6;
FIG.8 flowchart for a control method for an aerosol generating device, of another embodiment;
FIG. 9 is an example diagram illustrating a relationship between a charge-discharge cycle and a full charge voltage, according to the embodiment of FIG. 8;
FIG.10 flowchart for a control method for an aerosol generating device, of another embodiment;
FIG. 11 is an example diagram illustrating a relationship between temperature and a charge current, according to the embodiment of FIG. 10;
FIG.12 flowchart for a control method for an aerosol generating device, of another embodiment;
FIG. 13 is a block diagram of an aerosol generating device according to another embodiment.

### Mode for Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, embodiments of the present disclosure will be described in detail with reference to the drawings.

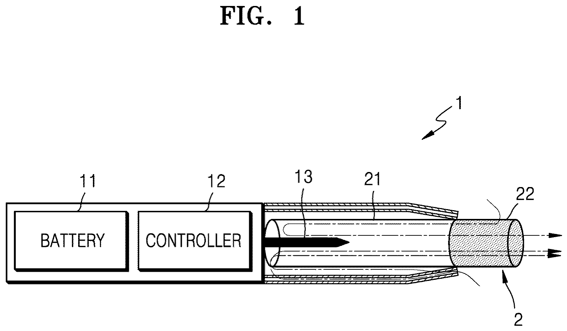

FIGS. 1 through 3 are diagrams showing examples in which a cigarette is inserted into an aerosol-generating device.

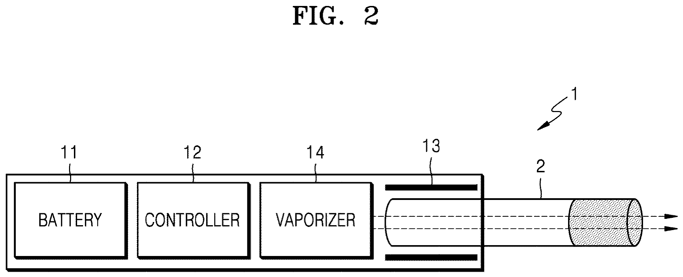

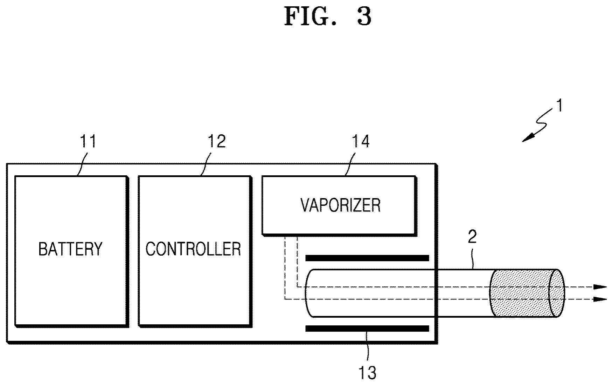

Referring to FIG. 1, the aerosol-generating device 1 may include a battery 11, a controller 12, and a heater 13. Referring to FIGS. 2 and 3, the aerosol-generating device 1 may further include a vaporizer 14. Also, the cigarette 2 may be inserted into an inner space of the aerosol-generating device 1.

FIGS. 1 through 3 illustrate components of the aerosol-generating device 1, which are related to the present embodiment. Therefore, it will be understood by one of ordinary skill in the art related to the present embodiment that other general-purpose components may be further included in the aerosol-generating device 1, in addition to the components shwon in FIGS. 1 through 3.

Also, FIGS. 2 and 3 illustrate that the aerosol-generating device 1 includes the heater 13. However, as necessary, the heater 13 may be omitted.

FIG. 1 illustrates that the battery 11, the controller 12, and the heater 13 are arranged in series. Also, FIG. 2 illustrates that the battery 11, the controller 12, the vaporizer 14, and the heater 13 are arranged in series. Also, FIG. 3 illustrates that the vaporizer 14 and the heater 13 are arranged in parallel. However, the internal structure of the aerosol-generating device 1 is not limited to the structures illustrated in FIGS. 1 through 3. In other words, according to the design of the aerosol-generating device 1, the battery 11, the controller 12, the heater 13, and the vaporizer 14 may be differently arranged.

When the cigarette 2 is inserted into the aerosol-generating device 1, the aerosol-generating device 1 may operate the heater 13 and/or the vaporizer 14 to generate aerosol from the cigarette 2 and/or the vaporizer 14. The aerosol generated by the heater 13 and/or the vaporizer 14 is delivered to a user by passing through the cigarette 2.

As necessary, even when the cigarette 2 is not inserted into the aerosol-generating device 1, the aerosol-generating device 1 may heat the heater 13.

The battery 11 may supply power to be used for the aerosol-generating device 1 to operate. For example, the battery 11 may supply power to heat the heater 13 or the vaporizer 14, and may supply power for operating the controller 12. Also, the battery 11 may supply power for operations of a display, a sensor, a motor, etc. mounted in the aerosol-generating device 1.

The controller 12 may generally control operations of the aerosol-generating device 1. In detail, the controller 12 may control not only operations of the battery 11, the heater 13, and the vaporizer 14, but also operations of other components included in the aerosol-generating device 1. Also, the controller 12 may check a state of each of the components of the aerosol-generating device 1 to determine whether or not the aerosol-generating device 1 is able to operate.

The controller 12 may include at least one processor. A processor can be implemented as an array of a plurality of logic gates or can be implemented as a combination of a general-purpose microprocessor and a memory in which a program executable in the microprocessor is stored. It will be understood by one of ordinary skill in the art that the processor can be implemented in other forms of hardware.

The heater 13 may be heated by the power supplied from the battery 11. For example, when the cigarette is inserted into the aerosol-generating device 1, the heater 13 may be located outside the cigarette. Thus, the heated heater 13 may increase a temperature of an aerosol generating material in the cigarette.

The heater 13 may include an electro-resistive heater. For example, the heater 13 may include an electrically conductive track, and the heater 13 may be heated when currents flow through the electrically conductive track. However, the heater 13 is not limited to the example described above and may include all heaters which may be heated to a desired temperature. Here, the desired temperature may be pre-set in the aerosol-generating device 1 or may be set as a temperature desired by a user.

As another example, the heater 13 may include an induction heater. In detail, the heater 13 may include an electrically conductive coil for heating a cigarette in an induction heating method, and the cigarette may include a susceptor which may be heated by the induction heater.

For example, the heater 13 may include a tube-type heating element, a plate-type heating element, a needle-type heating element, or a rod-type heating element, and may heat the inside or the outside of the cigarette 2, according to the shape of the heating element.

Also, the aerosol-generating device 1 may include a plurality of heaters 13. Here, the plurality of heaters 13 may be inserted into the cigarette 2 or may be arranged outside the cigarette 2. Also, some of the plurality of heaters 13 may be inserted into the cigarette 2 and the others may be arranged outside the cigarette 2. In addition, the shape of the heater 13 is not limited to the shapes illustrated in FIGS. 1 through 3 and may include various shapes.

The vaporizer 14 may generate aerosol by heating a liquid composition and the generated aerosol may pass through the cigarette 2 to be delivered to a user. In other words, the aerosol generated via the vaporizer 14 may move along an air flow passage of the aerosol-generating device 1 and the air flow passage may be configured such that the aerosol generated via the vaporizer 14 passes through the cigarette to be delivered to the user.

For example, the vaporizer 14 may include a liquid storage, a liquid delivery element, and a heating element, but it is not limited thereto. For example, the liquid storage, the liquid delivery element, and the heating element may be included in the aerosol-generating device 1 as independent modules.

The liquid storage may store a liquid composition. For example, the liquid composition may be a liquid including a tobacco-containing material having a volatile tobacco flavor component, or a liquid including a non-tobacco material. The liquid storage may be formed to be detachable from the vaporizer 14 or may be formed integrally with the vaporizer 14.

For example, the liquid composition may include water, a solvent, ethanol, plant extract, spices, flavorings, or a vitamin mixture. The spices may include menthol, peppermint, spearmint oil, and various fruit-flavored ingredients, but are not limited thereto. The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol.

The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto. In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated.

For example, the vaporizer 14 may be referred to as a cartomizer or an atomizer, but it is not limited thereto.

The aerosol-generating device 1 may further include general-purpose components in addition to the battery 11, the controller 12, the heater 13, and the vaporizer 14. For example, the aerosol-generating device 1 may include a display capable of outputting visual information and/or a motor for outputting haptic information. Also, the aerosol-generating device 1 may include at least one sensor (a puff detecting sensor, a temperature detecting sensor, a cigarette insertion detecting sensor, etc.). Also, the aerosol-generating device 1 may be formed as a structure that, even when the cigarette 2 is inserted into the aerosol-generating device 1, may introduce external air or discharge internal air.

Although not illustrated in FIGS. 1 through 3, the aerosol-generating device 1 and an additional cradle may form together a system. For example, the cradle may be used to charge the battery 11 of the aerosol-generating device 1. Alternatively, the heater 13 may be heated when the cradle and the aerosol-generating device 1 are coupled to each other.

The cigarette 2 may be similar to a general combustive cigarette. For example, the cigarette 2 may be divided into a first portion including an aerosol generating material and a second portion including a filter, etc. Alternatively, the second portion of the cigarette 2 may also include an aerosol generating material. For example, an aerosol generating material made in the form of granules or capsules may be inserted into the second portion.

The entire first portion may be inserted into the aerosol-generating device 1, and the second portion may be exposed to the outside. Alternatively, only a portion of the first portion may be inserted into the aerosol-generating device 1, or the entire first portion and a portion of the second portion may be inserted into the aerosol-generating device 1. The user may puff aerosol while holding the second portion by the mouth of the user. In this case, the aerosol is generated by the external air passing through the first portion, and the generated aerosol passes through the second portion and is delivered to the user's mouth.

For example, the external air may flow into at least one air passage formed in the aerosol-generating device 1. For example, opening and closing of the air passage and/or a size of the air passage formed in the aerosol-generating device 1 may be adjusted by the user. Accordingly, the amount and the quality of smoking may be adjusted by the user. As another example, the external air may flow into the cigarette 2 through at least one hole formed in a surface of the cigarette 2.

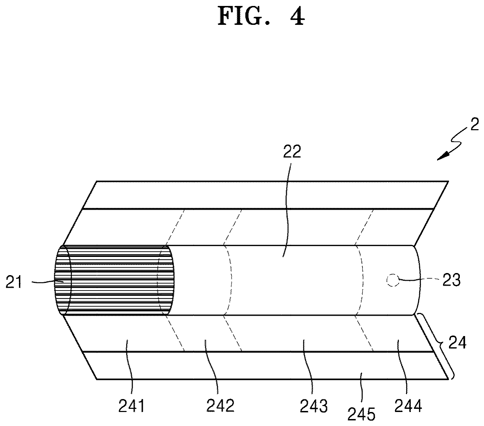

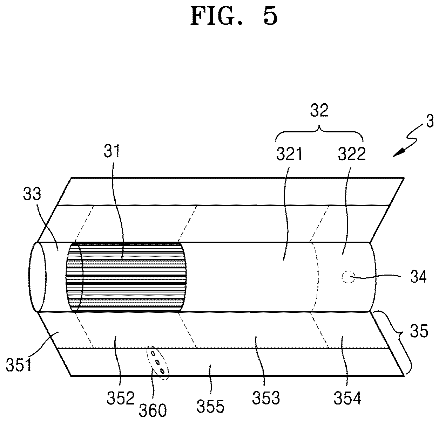

Hereinafter, examples of the cigarette 2 will be described with reference to FIGS. 4 and 5.

FIGS. 4 and 5 illustrate examples of a cigarette.

Referring to FIG. 4, the cigarette 2 may include a tobacco rod 21 and a filter rod 22. The first portion described above with reference to FIGS. 1 through 3 may include the tobacco rod 21, and the second portion may include the filter rod 22.

FIG. 4 illustrates that the filter rod 22 includes a single segment. However, the filter rod 22 is not limited thereto. In other words, the filter rod 22 may include a plurality of segments. For example, the filter rod 22 may include a first segment configured to cool an aerosol and a second segment configured to filter a certain component included in the aerosol. Also, according to necessity, the filter rod 22 may further include at least one segment configured to perform other functions.

The diameter of the cigarette 2 may be within the range of about 5mm to about 9mm and the length of the cigarette 2 may be about 48mm. However, the disclosure is not limited thereto. For example, the length of the tobacco rod 21 may be about 12mm, the length of the first segment of the filter rod 22 may be about 10mm, the length of the second segment of the filter rod 22 may be about 14mm, and the length of the third segment of the filter rod 22 may be about 12mm. However, disclosure is not limited thereto.

The cigarette 2 may be packaged via at least one wrapper 24. The wrapper 24 may have at least one hole through which external air may be introduced or internal air may be discharged. For example, the cigarette 2 may be packaged via one wrapper 24. As another example, the cigarette 2 may be doubly packaged via at least two wrappers 24. For example, the tobacco rod 21 may be packaged via a first wrapper 241, and the filter rod 22 may be packaged via second wrappers 242, 243, and 244. Also, the entire cigarette 2 may be packaged via a single wrapper 245. When the filter rod 22 includes a plurality of segments, each segment may be packaged via each of the second wrappers 242, 243, and 244.

The first wrapper 241 and the second wrapper 242 may each include general filter wrapping paper. For example, the first wrapper 241 and the second wrapper 242 may each include porous wrapping paper or non-porous wrapping paper. In addition, the first wrapper 241 and the second wrapper 242 may each include paper having oil resistance and/or an aluminum laminate packaging material.

The third wrapper 243 may include hard wrapping paper. For example, the basis weight of the third wrapper 243 may be in the range of about 88g/m2 to about 96g/m2, specifically in the range of about 90g/m2 to about 94g/m2. In addition, the thickness of the third wrapper 243 may be in the range of about 120um to about 130um, specifically 125um.

The fourth wrapper 244 may include oil-resistant hard wrapping paper. For example, the basis weight of the fourth wrapper 244 may be in the range of about 88g/m2 to about 96g/m2, specifically in the range of about 90g/m2 to about 94g/m2. In addition, the thickness of the fourth wrapper 244 may be in the range of about 120um to about 130um, specifically 125um.

The fifth wrapper 245 may include sterile paper (MFW). Here, the sterile paper (MFW) refers to a paper specially prepared so that tensile strength, water resistance, smoothness, etc. thereof are further improved compared to those of general paper. For example, the basis weight of the fifth wrapper 245 may be in the range of about 57g/m2 to about 63g/m2, specifically 60g/m2. In addition, the thickness of the fifth wrapper 245 may be in the range of about 64um to about 70um, specifically 67um.

A certain material may be internally added to the fifth wrapper 245. Here, an example of the certain material may include silicon, but is not limited thereto. For example, silicon has characteristics, such as heat resistance with little change with temperature, resistance to oxidation, resistance to various chemicals, water repellency against water, or electrical insulation. However, even though the certain material is not silicon, any material having the characteristics described above may be applied to (or coated on) the fifth wrapper 245 without limitation.

The fifth wrapper 245 may prevent the cigarette 2 from burning. For example, when the tobacco rod 21 is heated by the heater 13, there is a possibility that the cigarette 2 is burned. Specifically, when the temperature rises above the ignition point of any one of the materials included in the tobacco rod 21, the cigarette 2 may be burned. Even in this case, because the fifth wrapper 245 includes a non-combustible material, a burning phenomenon of the cigarette 2 may be prevented.

In addition, the fifth wrapper 245 may prevent a holder 1 from being contaminated by substances generated in the cigarette 2. By a user's puff, liquid substances may be generated in the cigarette 2. For example, as an aerosol generated in the cigarette 2 is cooled by the outside air, liquid substances (e.g., moisture, etc.) may be generated. As the fifth wrapper 245 wraps the cigarette 2, the liquid substances generated in the cigarette 2 may be prevented from leaking out of the cigarette 2.

The tobacco rod 21 includes an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 21 may be formed in various ways. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat-conducting material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod 21 may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

The first segment of the filter rod 22 may include a cellulose acetate filter. For example, the first segment may include a tube-shaped structure including a hollow therein. When the heater 13 is inserted by the first segment, the inner material of the tobacco rod 21 may be prevented from being pushed back, and a cooling effect of the aerosol may occur. The diameter of the hollow included in the first segment may be an appropriate diameter within the range of about 2mm to about 4.5mm, but is not limited thereto.

The length of the first segment may be an appropriate length within the range of about 4mm to about 30mm, but is not limited thereto. Specifically, the length of the first segment may be 10mm, but is not limited thereto.

The hardness of the first segment may be adjusted by adjusting the content of a plasticizer in the manufacture of the first segment. In addition, the first segment may be manufactured by inserting a structure, such as a film or a tube including the same material or different materials, inside the first segment (e.g., into the hollow).

The second segment of the filter rod 22 cools the aerosol generated as the heater 13 heats the tobacco rod 21. Thus, a user may inhale the aerosol cooled to a suitable temperature.

The length or diameter of the second segment may be variously determined according to the shape of the cigarette 2. For example, the length of the second segment may be appropriately determined within the range of about 7mm to about 20mm. Specifically, the length of the second segment may be about 14mm, but is not limited thereto.

The second segment may be fabricated by weaving polymer fibers. In this case, a flavored liquid may be applied to fibers made of polymer. Alternatively, the second segment may be fabricated by weaving a fiber to which a flavored liquid is applied and a fiber made of a polymer together. Alternatively, the second segment may be formed by a crimped polymer sheet.

For example, the polymer may include a material selected from the group consisting of polyethylene (PE), polypropylene (PP), polyvinyl chloride (PVC), polyethylene terephthalate (PET), polylactic acid (PLA), cellulose acetate (CA), and aluminum foil.

As the second segment is formed by a woven polymer fiber or crimped polymer sheet, the second segment may include a single channel or a plurality of channels extending in a longitudinal direction thereof. Here, the channel refers to a passage through which a gas (e.g., air or aerosol) passes.

For example, the second segment formed by the crimped polymer sheet may be formed from a material having a thickness between about 5µm and about 300µm, such as between about 10µm and about 250µm. Also, the total surface area of the second segment may be between about 300mm2/mm and about 1000mm2/mm. Furthermore, an aerosol cooling element may be formed from a material having a specific surface area between about 10mm2/mg and about 100mm2/mg.

The second segment may include a thread containing a volatile flavor ingredient. Here, the volatile flavor ingredient may be menthol, but is not limited thereto. For example, the thread may be filled with a sufficient amount of menthol to provide 1.5mg or more of menthol to the second segment.

The third segment of the filter rod 22 may include a cellulose acetate filter. The length of the third segment may be appropriately determined within the range of about 4mm to about 20mm. For example, the length of the third segment may be about 12mm, but is not limited thereto.

The third segment may be fabricated such that flavor is generated by spraying a flavored liquid on the third segment in the process of fabricating the third segment. Alternatively, a separate fiber to which a flavored liquid is applied may be inserted into the third segment. The aerosol generated by the tobacco rod 21 is cooled as the aerosol passes through the second segment of the filter rod 22, and the cooled aerosol is delivered to a user through the third segment. Accordingly, when a flavoring element is added to the third segment, an effect of enhancing the durability of a flavor delivered to the user may occur.

Also, the filter rod 22 may include at least one capsule 23. Here, the capsule 23 may generate a flavor or an aerosol. For example, the capsule 23 may have a configuration in which a liquid containing a flavoring material is wrapped with a film. For example, the capsule 23 may have a spherical or cylindrical shape, but is not limited thereto.

Referring to FIG. 5, the cigarette 2 may further include a front-end filter 33 that is a front-end plug. The front-end filter 33 may be located on a side of the tobacco rod 21, the side facing the filter rod 22. The front-end filter 33 may prevent the tobacco rod 31 from being detached outwards and prevent a liquefied aerosol from flowing into the aerosol-generating device 1 (FIGS. 1 through 3) from the tobacco rod 21, during smoking.

The filter rod 32 may include a first segment 321 and a second segment 322. Here, the first segment 321 may correspond to the first segment of the filter rod 22 of FIG. 4, and the second segment 322 may correspond to the third segment of the filter rod 22 of FIG. 4.

The total length and diameter of the cigarette 3 may correspond to the total length and diameter of the cigarette 2 of FIG. 4. For example, the length of the front-end filter 33 may be about 7mm, the length of the tobacco rod 31 may be about 15mm, the length of the first segment 321 may be about 12mm, and the length of the first segment 322 may be about 14mm, but the embodiments are not limited thereto.

The cigarette 3 may be packaged via at least one wrapper 35. The wrapper 35 may have at least one hole through which external air may be introduced or internal air may be discharged. For example, the front-end filter 33 may be packaged via a first wrapper 351, the filter rod 31 may be packaged via a second wrapper 352, the first segment 321 may be packaged via a third wrapper 353, and the second segment 322 may be packaged via a fourth wrapper 354. Additionally, a whole part of the cigarette 3 may be packaged by a fifth wrapper 355.

Also, the fifth wrapper 355 may have at least one through hole 36. For example, the through hole 36 may be formed at a portion of the fifth wrapper 355 surrounding the tobacco rod 31. The through hole 36 may perform a function of transmitting heat generated by the heater 31 shown in FIGS. 2 and 3 to the inside of the tobacco rod 31.

Also, the second segment 322 may include at least one capsule 34. Here, the capsule 34 may perform a function of generating a flavor or another function of generating aerosol. For example, the capsule 34 may have a configuration in which a liquid containing a flavoring material is wrapped with a film. For example, the capsule 34 may have a spherical or cylindrical shape, but is not limited thereto.

The first wrapper 351 may include general filter wrapping paper to which a metal foil such as an aluminum foil is coupled. For example, the total thickness of the first wrapper 351 may be in the range of about 45um to about 55um, specifically 50.3um. In addition, the thickness of the metal foil of the first wrapper 351 may be in the range of about 6um to about 7um, specifically 6.3um. In addition, the basis weight of the first wrapper 351 may be in the range of about 50g/m2 to about 55g/m2, specifically 53g/m2.

The second wrapper 352 and the third wrapper 353 may each include general filter wrapping paper. For example, the second wrapper 352 and the third wrapper 353 may each include porous wrapping paper or non-porous wrapping paper.

For example, the porosity of the second wrapper 352 may be 35,000CU, but is not limited thereto. In addition, the thickness of the second wrapper 352 may be in the range of about 70um to about 80um, specifically 78um. In addition, the basis weight of the second wrapper 352 may be in the range of about 20g/m2 to about 25g/m2, specifically 23.5g/m2.

For example, the porosity of the third wrapper 353 may be 24,000CU, but is not limited thereto. In addition, the thickness of the third wrapper 353 may be in the range of about 60um to about 70um, specifically 68um. In addition, the basis weight of the third wrapper 353 may be in the range of about 20g/m2 to about 25g/m2, specifically 21g/m2.

The fourth wrapper 354 may include PLA laminated paper. Here, the PLA laminated paper refers to a three-ply paper including a paper layer, a PLA layer, and a paper layer. For example, the thickness of the fourth wrapper 354 may be in the range of about 100um to about 120um, specifically 110um. In addition, the basis weight of the fourth wrapper 354 may be in the range of about 80g/m2 to about 100g/m2, specifically 88g/m2.

The fifth wrapper 355 may include sterilized paper (MFW). Here, the sterile paper (MFW) refers to a paper specially prepared so that tensile strength, water resistance, smoothness, etc. thereof are further improved compared to those of general paper. For example, the basis weight of the fifth wrapper 355 may be in the range of about 57g/m2 to about 63g/m2, specifically 60g/m2. In addition, the thickness of the fifth wrapper 355 may be in the range of about 64um to about 70um, specifically 67um.

A certain material may be internally added to the fifth wrapper 355. Here, an example of the certain material may include, but is not limited thereto. For example, silicon has characteristics, such as heat resistance with little change with temperature, resistance to oxidation, resistance to various chemicals, water repellency against water, or electrical insulation. However, even though the certain material is not silicon, any material having the characteristics described above may be applied to (or coated on) the fifth wrapper 355 without limitation.

The shear plug 33 may include cellulose acetate. As an example, the front-end filter 33 may be fabricated by adding a plasticizer (e.g., triacetin) to a cellulose acetate tow. The mono denier of a filament constituting the cellulose acetate tow may be in the range of about 1.0 to about 10.0, specifically in the range of about 4.0 to about 6.0. More specifically, the mono denier of the filament of the front-end filter 33 may be 5.0. In addition, the cross-section of the filament constituting the front-end filter 33 may have a Y-shape. The total denier of the front-end filter 33 may be in the range of about 20,000 to about 30,000, preferably in the range of about 25,000 to about 30,000. More specifically, the total denier of the front-end filter 33 may be 28,000.

In addition, if necessary, the front-end filter 33 may include at least one channel, and the cross-section of the channel may have various shapes.

The tobacco rod 31 may correspond to the tobacco rod 21 described above with reference to FIG. 4. Therefore, a detailed description of the tobacco rod 31 is omitted below.

The first segment 321 may include cellulose acetate. For example, the first segment may include a tube-shaped structure including a hollow therein. The first segment 321 may be fabricated by adding a plasticizer (e.g., triacetin) to the cellulose acetate tow. For example, the mono denier and total denier of the first segment 321 may be the same as the mono denier and total denier of the front-end filter 33.

The second segment 322 may include cellulose acetate. The mono denier of a filament constituting the second segment 322 may be in the range of about 1.0 to about 10.0, specifically in the range of about 8.0 to about 10.0. More specifically, the mono denier of the filament of the second segment 322 may be 9.0. In addition, the cross-section of the filament of the second segment 322 may have a Y-shape. The total denier of the second segment 322 may be in the range of about 20,000 to about 30,000, specifically 25,000.

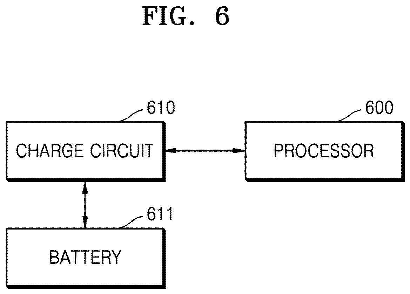

FIG. 6 is a block diagram of an aerosol generating device according to one embodiment.

Referring to FIG. 6, the aerosol generating device includes a processor 600, a charge circuit 610, and a battery 611. The aerosol generating device according to the embodiment may adjust a full charge voltage of a battery and an output of the battery according to the number of times of charge-discharge of the battery or the period of use of the battery, and thus, a user's reliability on the aerosol generating device may be increased. For example, in a cigarette-type aerosol generating device (the aerosol generating device described with reference to FIGS. 1 to 3), the capacity of a battery is set such that approximately one pack of cigarettes, that is, 20 cigarettes may be consumed or smoked when the battery is fully charged. However, the longer a user uses an aerosol generating device, the longer the battery ages. As a result, there is a problem in that, even when a battery is fully charged, a user may not smoke 20 cigarettes, and after 15 cigarettes are smoked, the battery is completely discharged, and the user has to recharge the battery even though there remains 5 cigarettes, and thereby, reliability on the aerosol generating device or the battery may be reduced. The aerosol generating device according to the embodiment may lower a full charge voltage of a battery when charging the battery or may lower an output current of the battery to a certain level in consideration of the number of times of charge-discharge of the battery or the period of use of the battery, and thus, the aerosol generating device may ensure sufficient number of times of smoking to users.

Referring again to FIG. 6, the processor 600 may control all operations of the aerosol generating device. The processor 600 may control charge of the battery 611 using an external power source, for example, a commercial power source, and control an output of the battery 611 to control the temperature of a heater. Here, the heater (not illustrated) may include the heater 13 or the vaporizer 14 illustrated in FIGS. 1 to 3 but is not limited thereto. The processor 600 according to the embodiment may monitor charge-discharge cycles of the battery 611 and control a full charge voltage when the battery 611 is charged and an output of the battery 611, based on the charge-discharge cycles. Here, the charge-discharge cycle means a case where the battery 611 is charged to 100 % and then discharged to 100 % again. For example, a total of 200 % of charge of 100 % and discharge of 100 % may be defined as 1 cycle, based on a state of charge (SOC) of a battery. Here, the full charge voltage refers to a voltage value when a battery is charged 100 %. For example, in a cylindrical lithium-ion battery, a full charge voltage is 4.2 V, a stop voltage is 3.0 V, and a nominal voltage is about 3.6 V to 3.8 V. This may vary by about 0.1 V to about 0.2 V depending on manufacturers. The processor 600 may adjust a full charge voltage and a charge current when charging the battery 6110, and an output current when discharging the battery 611 according to charge-discharge cycles, and thus, a sufficient number of times of smoking may be ensured by the aerosol generating device without reducing a user's reliability despite a decrease in battery performance.

The processor 600 may monitor charge-discharge cycles of the battery 611 in various ways. In the embodiment, the processor 600 may count once the total of charge of 200 % and discharge of 100 %, based on the SOC of a battery as one cycle. For example, in a case of charge of 80 % and discharge of 80 %, the cycle is not counted immediately, and after charge of 20 % and discharge of 20 % of the battery are made, it may be determined that 1 cycle is completed.

In one example, the processor 600 may also calculate the count, based on the period of use of the aerosol generating device accessorily to or in parallel with charge-discharge cycles of the battery. For example, when one day elapsed based on the timer, the processor 600 may count once.

In another example, the processor 600 may calculate the count accessorily to or in parallel with the charge-discharge cycles of the battery, that is, the processor 600 may also determine the count as one cycle when a certain number of puffs, for example 300 puffs, are counted through a user's inhalation counting, that is, puff counting. Here, puff characteristic data including puff characteristics, for example, puff intensity and puff cycles, may be extracted for each user, and the puff characteristic data may also be reflected in the number of puffs.

In another example, the processor 600 may calculate the count, based on the number of replacements of a cartridge that stores an aerosol generating material accessorily to or in parallel with the charge-discharge cycles of the battery. For example, when a liquid cartridge stores a liquid aerosol generating material for 20 smokes (14 puffs per 1 smoke), and when the cartridge is replaced 100 times, the count may be determined as 100 cycles.

In another example, the charge circuit 610 may count charge-discharge cycles, based on the SOC of the battery. The charge circuit 610 may transmit the counted number of charge-discharge cycles to the processor 600. The charge circuit 610 may be a charge IC or charger IC. The charge circuit 610 may perform the most appropriate charge control from the viewpoint of safely extending a lifespan of the battery 611 while monitoring three factors of a voltage, a current, and temperature during charge. The charge circuit 610 may charge the battery 611 by various charge methods, such as constant current (CC) charge, constant voltage (CV) charge, constant power (CP) charge, and constant current and constant voltage (CCCV) charge. The constant current and constant voltage (CCCV) charge is a representative charge method for secondary batteries, such as lithium-ion batteries, and is a method that may switch between the CC charge in which a charge current is maintained constant and the CV charge in which a charge voltage is maintained constant, according to a voltage of a battery.

In another example, the processor 600 may also determine the cycle or adjust a full charge voltage reference rate through battery aging determination. That is, in addition to a cycle determination criteria according to the embodiment described above, a rate of lowering a voltage or a current may also be adjusted by adding an additional weight to a full charge voltage or an output current of a battery depending on the degree of battery aging.

In another example, the battery 611 is not only provided in an aerosol generating device but also consists of an aerosol generating device (a holder) and a case (a cradle) and the aerosol generating device is inserted into the case to be stored and charged, monitoring the charge-discharge cycles of the battery may also be applied to the case (the cradle) in the same manner.

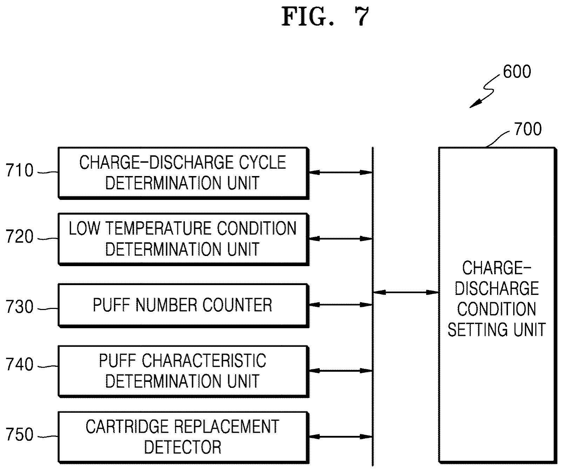

The processor 600 according to the embodiment may determine the charge-discharge cycles of the battery 611 by using the various methods described above, and the respective methods may also be applied accessorily or in parallel in a complementary manner. Detailed functional modules of the processor 600 are described below with reference to FIG. 7.

FIG. 7 is a block diagram of functional modules of the processor according to the embodiment of FIG. 6.

Referring to FIG. 7, the processor 600 may include a charge-discharge condition setting unit 700, a charge-discharge cycle determination unit 710, a low temperature condition determination unit 720, a puff number counter 730, a puff characteristic determination unit 740, and a cartridge replacement detector 750. Here, respective components or determination functional modules may also be implemented in their entireties, implemented with some components omitted, or implemented selectively. Also, it goes without saying that the processor 600 may perform each function as a whole without dividing each function into individual functional modules.

The charge-discharge condition setting unit 700 may set a full charge voltage when charging a battery or an output current when discharging the battery to a lower full charge voltage or a lowered output current according to monitoring results of the charge-discharge cycles. Also, when a temperature detected from a surrounding temperature of an aerosol generating device or a battery temperature is a low temperature, that is, a low temperature condition, a charge current when charging the battery is set to a current that is lower than the preset charge current. Also, charge-discharge conditions may also be set according to monitoring results of the charge-discharge cycles in which inhalation counts or inhalation characteristics of a user are reflected. Furthermore, the charge-discharge conditions may also be set according to the monitoring results of the charge-discharge cycles in which the number of cartridge replacements is reflected.

The charge-discharge cycle determination unit 710 may determine charge of 100 % and discharge of 100 % as 1 cycle, based on a SOC of a battery, and may determine whether the number of cumulated cycles is greater than a first threshold cycle number. When the number of cumulated cycles is greater than the first threshold cycle number, the charge-discharge cycle determination unit 710 may output a control signal for changing the charge-discharge conditions to the charge-discharge condition setting unit 700.

The charge-discharge condition setting unit 700 may set conditions for changing a full charge voltage of a battery when charging or an output current of the battery when discharging in response to the control signal When the number of cumulated cycles is greater than the first threshold cycle number, the charge-discharge condition setting unit 700 may set the full charge voltage to a first voltage that is lower than an initial full charge voltage. Alternatively, the output current may be set to a first current that is lower than an initial output current.

Here, the first threshold cycle number may be randomly determined. The first threshold cycle number may be the number of cycles less than the number of charge-discharge cycles pre-set by a manufacturer that guarantees the performance of a battery. For example, when efficiency of 80 % is guaranteed for 300 charge-discharge cycles in a basic battery specification provided by a battery manufacturer, the first threshold cycle number may be 200 which is less than 300. Therefore, the aerosol generating device may adjust or lower a full charge voltage at the time of charge or an output current at the time of discharge before performance is reduced due to battery aging, and thus, the aerosol generating device may ensure a sufficient number of smoking cycles (for example, with full charge of 100 % at one time, 20 cigarettes may be consumed, or a liquid cartridge capable of smoking 20 number of times may be consumed with 20 smokes).

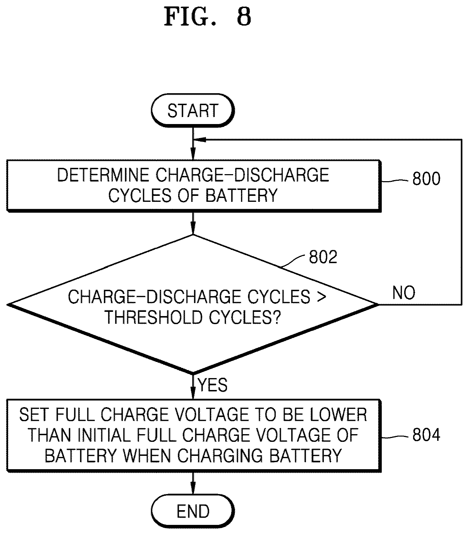

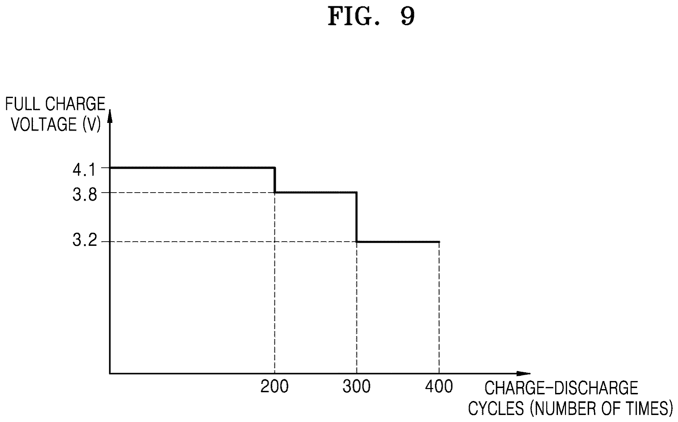

Controlling the charge-discharge cycles and the full charge voltage are described with reference to FIGS. 8 and 9.

Referring to FIG. 8, in operation 800, a charge-discharge cycle of a battery is determined. When the number of charge-discharge cycles is more than a threshold cycle, in operation 804 in operation 802, a charge voltage is set to a full charge voltage that is lower than the initial full charge voltage in operation 804 when charging a battery.

Referring to FIG. 9, when the charge-discharge cycles of the battery is 0 to 200, the full charge voltage is maintained at 4.1 V, and when the number of charge-discharge cycles is greater than 200, the full charge voltage of the battery is lowered to 3.8 V. When the number of charge-discharge cycles is greater than 300, the full charge voltage of the battery is lowered to 3.2 V. Here, 300 charge-discharge cycles may be a reference by which a battery manufacturer guarantees 80 % of battery efficiency, and the full charge voltage may be lowered based on 200 charge-discharge cycles that is lower than the 300 charge-discharge cycles guaranteed by the battery manufacturer, and when the number of charge-discharge cycles is more than the 300 charge-discharge cycles, the full charge voltage may be further lowered. Although FIG. 9 illustrates that a fixed full charge voltage is maintained according to the charge-discharge cycles, the full charge voltage is not limited thereto and may be changed in proportion to the number of times of charge-discharge. Also, the numerical values of the full charge voltages and the number of charge-discharge cycles illustrated in FIG. 9 are examples and are not limited thereto. The full charge voltage and the charge-discharge cycles may change depending on battery types, manufacturer specifications, usage conditions, and environment.

The low temperature condition determination unit 720 may receive an ambient temperature and a battery temperature of an aerosol generating device and determine whether the ambient temperature and the battery temperature correspond to low temperature conditions. For example, the low temperature condition determination unit 720 may receive a temperature value from a temperature sensor that detects an external or ambient temperature of the aerosol generating device and a battery temperature sensor that detects the temperature of the battery. When the received temperature is lower than a threshold temperature, for example, 10 degrees Celsius, the low temperature condition determination unit 720 transmits a control signal to the charge-discharge condition setting unit 700 to cause the charge-discharge condition setting unit 700 to lower a charge current to a preset charge current or lower an output current to a preset output current. Here, 10 degrees Celsius is an example, and may also be set to another temperature or a segmented temperature range according to general temperature conditions and environment.

The charge-discharge condition setting unit 700 sets conditions for changing the charge current of the battery when charging the battery or the output current when discharging the battery in response to the control signal from the low temperature condition determination unit 720.

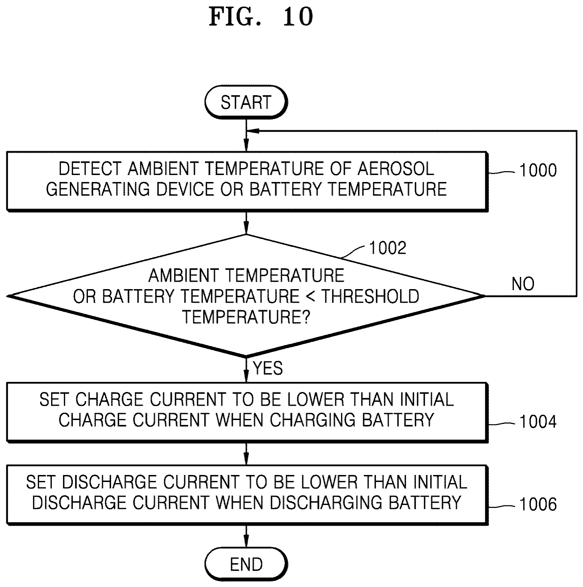

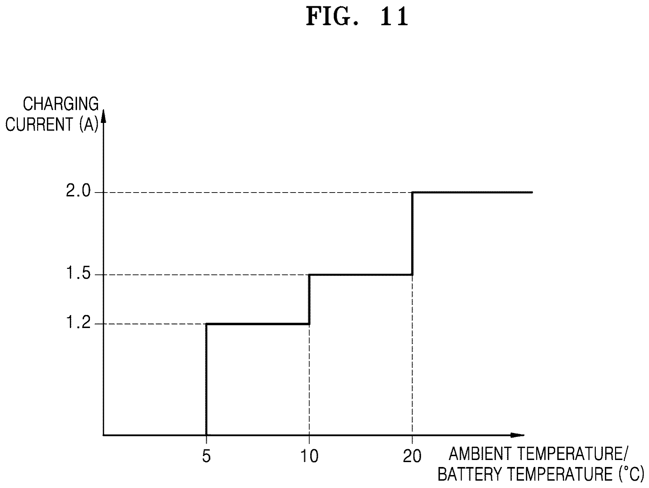

Adjusting the low temperature condition and charge current are described with reference to FIGS. 10 and 11.

Referring to FIG. 10, in operation 1000, the ambient temperature or battery temperature of an aerosol generating device is detected.

When the ambient temperature or the battery temperature is lower than the threshold temperature in operation 1002, the charge current is set to be lower than the initial charge current in operation 1004 when charging the battery, and the discharge current is set to be lower than the initial discharge current in operation 1006 when discharging the battery. Here, operation 1004 and operation 1006 may be performed selectively or in parallel with each other.

Referring to FIG. 11, when the ambient temperature or battery temperature is 20 degrees Celsius, the charge current may be maintained at a normal charge current of 2 A, and when the ambient temperature or battery temperature is lower than 20 degrees Celsius, the charge current may be lowered to 1.5 A, and when the ambient temperature or battery temperature is lower than 10 degrees Celsius, the charge current may be lowered to 1.2 A. Here, 20 degrees Celsius or 10 degrees Celsius is an example, and the ambient temperature or battery temperature may be set to other temperatures or a segmented temperature range according to general temperature conditions and environment. Also, the charge currents of 2 A, 1.5 A, 1.2 A, and so on are example values and are not limited thereto and may change depending on the type of battery, manufacturer specifications, usage conditions, and environment.

The puff number counter 730 counts the number of puffs of a user and the number of cumulated puffs. The puff number counter 730 may receive the number of puffs from a pressure sensor or puff sensor in an airflow channel for user inhalation inside the aerosol generating device. Also, a user's puff may be estimated from a temperature change detected by a temperature sensor for detecting a temperature change of a heater, a change in power supplied to the heater, or a dielectric constant change detected by a sensor near an aerosol generating material, and thereby, the number of puffs may be counted. The puff number counter 730 may provide the number of cumulated puffs to the charge-discharge condition setting unit 700 or the charge-discharge cycle determination unit 710.

The charge-discharge condition setting unit 700 or the charge-discharge cycle determination unit 710 may determine the charge-discharge cycles by using only the number of cumulated puffs, and may also supplement the accuracy of charge-discharge cycles obtained by accumulating one cycle, which is determined based on charge of 100 % and discharge of 100 %, based on the SOC of a battery. For example, when the number of cumulated puffs is 60,000, the charge-discharge cycles may correspond to 200 cycles of charge of 100 % and discharge of 100%, based on the SOC of a battery. Therefore, when the number of cumulated puffs is 60,000, the charge-discharge condition setting unit 700 may set a condition for lowering the battery full charge voltage. Also, the charge-discharge condition setting unit 700 may supplement the accuracy by determining the weighted average of the number of charge-discharge cycles determined based on the SOC of a battery and the number of cumulated puffs counted by the puff number counter 730 as the charge-discharge cycles.

The puff characteristic determination unit 740 may determine puff characteristic data including puff intensity and puff cycle. The intensity of inhalation and the cycle of inhalation may change for each user, and the puff characteristic determination unit 740 may determine the intensity of inhalation and the cycle of inhalation and provide the intensity of inhalation and the cycle of inhalation to the puff number counter 730, and the puff number counter 730 may reflect the puff characteristic data in an actual counted puff number.

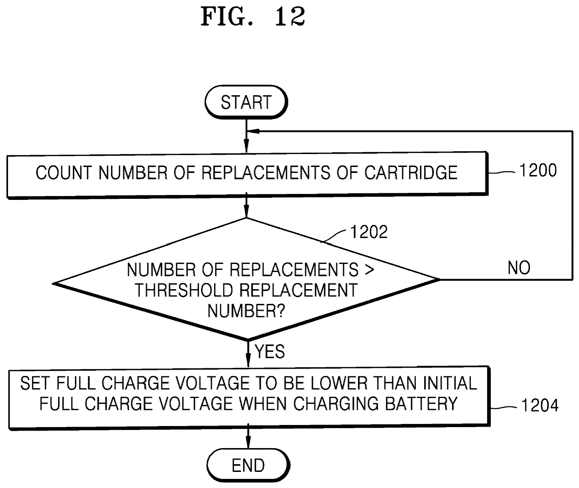

The cartridge replacement detector 750 may detect the number of cartridge replacements. A cartridge may store a preset amount of aerosol generating material, and a connection terminal for attachment and detachment is provided in an accommodating space of the aerosol generating device. The aerosol generating material may be liquid, and when the amount of liquid sufficient for 20 smokes is consumed, the cartridge has to be replaced with new cartridge. In the embodiment, the connection terminal may be detected, attachment and detachment of the cartridge may be detected, and the attachment and detachment may be detected as the number of replacements. For example, when one replacement of the cartridge may correspond to one charge-discharge cycle, and when the cartridge is replaced 200 number of times, the charge-discharge condition setting unit 700 may set a condition for lowering the battery full charge voltage. Also, the charge-discharge condition setting unit 700 may supplement the accuracy by determining the weighted average of the number of charge-discharge cycles determined based on the SOC of a battery and the number of cumulated replacements detected by the cartridge replacement detector 750 as the charge-discharge cycles. Adjusting cartridge replacement and a full charge voltage is described with reference to FIG. 12.

In another example, when a cartridge is a liquid cartridge, the remaining amount of liquid may be detected by a sensor for detecting the remaining amount of liquid, for example, a capacitor sensor, and thereby, the charge or discharge conditions may be set, or the amount of discharge currents may also be adjusted at low temperature conditions.

Referring to FIG. 12, in operation 1300, the number of cartridge replacements may be counted. In operation 1202, when the number of replacements is greater than a threshold replacement number in operation 1024, the full charge voltage may be set to be lower than an initial full charge voltage when charging a battery.

In the embodiment, the charge-discharge condition setting unit 700 may receive charge-discharge cycle monitoring results from at least one of the charge-discharge cycle determination unit 710, the low temperature condition determination unit 720, the puff number counter 730, the puff characteristic determination unit 740, and the cartridge replacement detector 750 and may control a full charge voltage and a charge current when charging a battery, and an output current of the battery, based on the charge-discharge cycles. The charge-discharge condition setting unit 700 may transmit a control signal for controlling the full charge voltage and charge current when charging a battery to a charge integrated circuit (IC) (the charge circuit 610 illustrated in FIG. 6). Also, the control signal for controlling the output current of the battery may be transmitted to a heater (the heater illustrated in FIGS. 1 to 3) or a heating IC (not illustrated). The charge IC may control battery charge according to a control signal (a full charge voltage condition or a discharge current condition) transmitted from the charge-discharge condition setting unit 700 by combining the various charge methods described above. Also, the processor 600 may adjust an output current of a power profile provided to the heater or may adjust an output current of a heating IC (not illustrated).

The aerosol generating device according to the embodiment may ensure a sufficient number of times of smoking guaranteed by the device itself, and may increase reliability and satisfaction of a user by delaying an unusable state due to aging of a battery as much as possible.

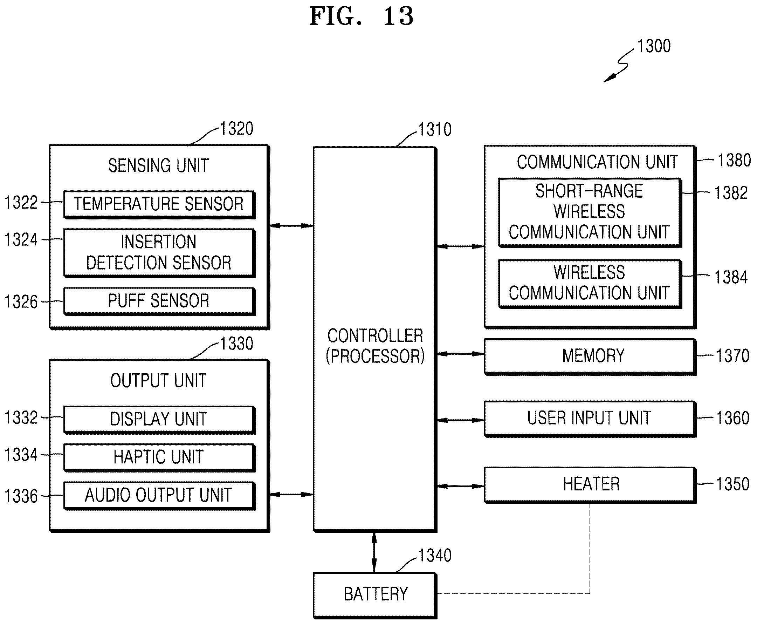

FIG. 13 is a block diagram of an aerosol generating device 1300 according to another embodiment.

Referring to FIG. 13, the aerosol generating device 1300 may include a controller 1310, a sensing unit 1320, an output unit 1330, a battery 1340, a heater 1350, a user input unit 1360, a memory 1370, and a communication unit 1380. However, the internal structure of the aerosol generating device 1300 is not limited to those illustrated in FIG. 13. That is, according to the design of the aerosol generating device 1300, it will be understood by one of ordinary skill in the art that some of the components shown in FIG. 13 may be omitted or new components may be added.

In the embodiment, the controller 1310 may monitor charge-discharge cycles of the battery 1340 and control a full charge voltage when charging the battery 1340 and an output of the battery 1340, based on the charge-discharge cycles.

The sensing unit 1320 may sense a state of the aerosol generating device 1300 and a state around the aerosol generating device 1300, and transmit sensed information to the controller 1310. Based on the sensed information, the controller 1310 may control the aerosol generating device 1300 to perform various functions, such as controlling an operation of the heater 1350, limiting smoking, determining whether an aerosol generating article (for example, a cigarette, a cartridge, or so on) is inserted, displaying a notification, or so on.

The sensing unit 1320 may include at least one of a temperature sensor 1322, an insertion detection sensor, and a puff sensor 1326, but is not limited thereto.

The temperature sensor 1322 may sense a temperature at which the heater 1350 (or an aerosol generating material) is heated. The aerosol generating device 1300 may include a separate temperature sensor for sensing the temperature of the heater 1350, or the heater 1350 may serve as a temperature sensor. Alternatively, the temperature sensor 1322 may also be arranged around the battery 1340 to monitor the temperature of the battery 1340.

In the embodiment, the temperature sensor 1322 may transmit an external temperature or a battery temperature to the controller 1310 to determine a low temperature condition, and in case of the low temperature condition, the controller 1310 may set the charge current to a current that is lower than a preset charge current when charging the battery 1340.

The insertion detection sensor 1324 may sense insertion and/or removal of an aerosol generating article. For example, the insertion detection sensor 1324 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 1326 may sense a user's puff on the basis of various physical changes in an airflow passage or an airflow channel. For example, the puff sensor 1326 may sense a user's puff on the basis of any one of a temperature change, a flow change, a voltage change, and a pressure change.

In the embodiment, when the puff sensor 1326 transmits a puff sensing result to the controller 1310, the controller 1310 may count and accumulate the number of puffs or determine puff characteristic data, and may monitor charge-discharge cycles, based on the determination result.

The sensing unit 1320 may include, in addition to the temperature sensor 1322, the insertion detection sensor 1324, and the puff sensor 1326 described above, at least one of a temperature/humidity sensor, a barometric pressure sensor, a magnetic sensor, an acceleration sensor, a gyroscope sensor, a location sensor (for example, a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 1330 may output information on a state of the aerosol generating device 1300 and provide the information to a user. The output unit 1330 may include at least one of a display unit 1332, a haptic unit 1334, and a sound output unit 1336, but is not limited thereto. When the display unit 1332 and a touch pad form a layered structure to form a touch screen, the display unit 1332 may also be used as an input device in addition to an output device.

The display unit 1332 may visually provide information about the aerosol generating device 1300 to the user. For example, information about the aerosol generating device 1300 may mean various pieces of information, such as a charge/discharge state of the battery 1340 of the aerosol generating device 1300, a preheating state of the heater 1350, an insertion/removal state of an aerosol generating article, or a state in which the use of the aerosol generating device 1300 is restricted (for example, sensing of an abnormal object), or so on, and the display unit 1332 may output the information to the outside. The display unit 1332 may be, for example, a liquid crystal display panel (LCD), an organic light-emitting diode (OLED) display panel, or so on. In addition, the display unit 1332 may be in the form of a light-emitting diode (LED) light-emitting device.

The haptic unit 1334 may tactilely provide information about the aerosol generating device 1300 to the user by converting an electrical signal into a mechanical stimulus or an electrical stimulus. For example, the haptic unit 1334 may include a motor, a piezoelectric element, or an electrical stimulation device.

The sound output unit 1336 may audibly provide information about the aerosol generating device 1300 to the user. For example, the sound output unit 1336 may convert an electrical signal into a sound signal and output the same to the outside.

The battery 1340 may supply power used to operate the aerosol generating device 1300. The battery 1340 may supply power such that the heater 1350 may be heated. In addition, the battery 1340 may supply power required for operations of other components (for example, the sensing unit 1320, the output unit 1330, the user input unit 1360, the memory 1370, and the communication unit 1380) in the aerosol generating device 1300. The battery 1340 may be a rechargeable battery or a disposable battery. For example, the battery 1340 may be a lithium polymer (LiPoly) battery, but is not limited thereto.

The heater 1350 may receive power from the battery 1340 to heat an aerosol generating material. Although not illustrated in FIG. 13, the aerosol generating device 1300 may further include a power conversion circuit (for example, a direct current (DC)/DC converter) that converts power of the battery 1340 and supplies the same to the heater 1350. In addition, when the aerosol generating device 1300 generates aerosols in an induction heating method, the aerosol generating device 1300 may further include a DC/alternating current (AC) that converts DC power of the battery 1340 into AC power.

The controller 1310, the sensing unit 1320, the output unit 1330, the user input unit 1360, the memory 1370, and the communication unit 1380 may each receive power from the battery 1340 to perform a function. Although not illustrated in FIG. 13, the aerosol generating device 1300 may further include a power conversion circuit that converts power of the battery 1340 to supply the power to respective components, for example, a low dropout (LDO) circuit, or a voltage regulator circuit.

In an embodiment, the heater 1350 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or so on, but is not limited thereto. In addition, the heater 1350 may be implemented by a metal wire, a metal plate on which an electrically conductive track is arranged, a ceramic heating element, or so on, but is not limited thereto.

In another embodiment, the heater 1350 may be a heater of an induction heating type. For example, the heater 1350 may include a susceptor that heats an aerosol generating material by generating heat through a magnetic field applied by a coil.

In another embodiment, the heater 1350 may include a plurality of heaters. For example, the heater 1350 may include a first heater for heating a cigarette and a second heater for heating a liquid.

The user input unit 1360 may receive information input from the user or may output information to the user. For example, the user input unit 1360 may include a key pad, a dome switch, a touch pad (a contact capacitive method, a pressure resistance film method, an infrared sensing method, a surface ultrasonic conduction method, an integral tension measurement method, a piezo effect method, or so on), a jog wheel, a jog switch, or so on, but is not limited thereto. In addition, although not illustrated in FIG. 13, the aerosol generating device 1300 may further include a connection interface, such as a universal serial bus (USB) interface, and may connect to other external devices through the connection interface, such as the USB interface, to transmit and receive information, or to charge the battery 1340.

The memory 1370 is a hardware component that stores various types of data processed in the aerosol generating device 1300, and may store data processed and data to be processed by the controller 1310. The memory 1370 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 1370 may store an operation time of the aerosol generating device 1300, the maximum number of puffs, the current number of puffs, at least one temperature profile, data on a user's smoking pattern, etc.

The communication unit 1380 may include at least one component for communication with another electronic device. For example, the communication unit 1380 may include a short-range wireless communication unit 1382 and a wireless communication unit 1384.

The short-range wireless communication unit 1382 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultra-wideband (UWB) communication unit, an Ant+ communication unit, or so on, but is not limited thereto.

The wireless communication unit 1384 may include a cellular network communication unit, an Internet communication unit, a computer network (for example, local area network (LAN) or wide area network (WAN)) communication unit, or so on, but is not limited thereto. The wireless communication unit 1384 may also identify and authenticate the aerosol generating device 1300 within a communication network by using subscriber information (for example, International Mobile Subscriber Identifier (IMSI)).

The controller 1310 may control general operations of the aerosol generating device 1300. In an embodiment, the controller 1310 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

The controller 1310 may control the temperature of the heater 1350 by controlling the supply of power from the battery 1340 to the heater 1350. For example, the controller 1310 may control the supply of power by controlling switching of a switching device between the battery 1340 and the heater 1350. In another example, a heating integrated circuit may control the supply of power to the heater 1350 according to a control command from the controller 1310.

The controller 1310 may analyze the result detected by the sensing unit 1320 and control subsequent processing. For example, the controller 1310 may control the power supplied to the heater 1350 to start or end an operation of the heater 1350, based on the result detected by the sensing unit 1320. For example, the controller 1310 may control the power supplied to the heater 1350 and the time at which power is supplied based on the result detected by the sensing unit 1320 such that the heater 1350 may be heated to a preset temperature or maintain an appropriate temperature.

The controller 1310 may control the output unit 1330, based on the result detected by the sensing unit 1320. For example, when the number of puffs counted by the puff sensor 1326 reaches a preset number, the controller 1310 may notify a user that the aerosol generating device 1300 will soon be shut down through at least one of the display unit 1332, the haptic unit 1334, and the sound output unit 1336.

Those of ordinary skill in the art related to the present embodiments may understand that various changes in form and details may be made therein without departing from the scope of the characteristics described above. Therefore, the disclosed methods should be considered in a descriptive point of view, not a restrictive point of view. The scope of the disclosure is defined by the appended claims rather than by the foregoing description, and all differences within the scope of equivalents thereof should be construed as being included in the disclosure.

## Claims

1. An aerosol generating device comprising:
a heater configured to heat an aerosol generating material;
a battery that is rechargeable and configured to supply power to the heater; and
a processor configured to control charge of the battery from an external power supply and configured to control an output of the battery to control a temperature of the heater,
wherein the processor is further configured to monitor charge-discharge cycles of the battery and control a full charge voltage when charging the battery and the output of the battery, based on the charge-discharge cycles.

2. The aerosol generating device of claim 1, wherein the processor is further configured to determine charge of 100 % and discharge of 100 % as one cycle, based on a state of charge (SOC) of the battery, and set the full charge voltage to a first voltage that is lower than an initial full charge voltage when a number of cumulated cycles is greater than a first threshold cycle number.

3. The aerosol generating device of claim 2, wherein the first threshold cycle number is less than a number of charge-discharge cycles preset by a manufacturer to guarantee performance of the battery.

4. The aerosol generating device of claim 1, further comprising a puff sensor configured to detect a user's puff,
wherein the processor is further configured to monitor the charge-discharge cycles, based on a number of cumulated puffs.

5. The aerosol generating device of claim 4, wherein the processor is further configured to accumulate a number of puffs by reflecting puff characteristic data including puff intensity and puff cycle.

6. The aerosol generating device of claim 1, further comprising a connection terminal configured to detect attachment and detachment of a cartridge storing a preset amount of the aerosol generating material to an accommodation space of the aerosol generating device,
wherein the processor is further configured to count a number of replacements according to the attachment and detachment of the cartridge and monitor the charge-discharge cycles, based on a number of cumulated replacements.

7. The aerosol generating device of claim 1, further comprising at least one temperature sensor from among a temperature sensor configured to detect an ambient temperature of the aerosol generating device and a temperature sensor configured to detect a temperature of the battery,
wherein the processor is further configured to set a charge current when charging the battery to a current that is lower than a preset charge current when a temperature detected by the at least one temperature sensor is lower than a threshold temperature.

8. The aerosol generating device of claim 7, wherein the processor is further configured to set a discharge current when discharging the battery to a current that is lower than a preset discharge current when the temperature detected by the at least one temperature sensor is lower than the threshold temperature.

9. The aerosol generating device of claim 1, further comprising a charge circuit configured to control the charge of the battery,
wherein the charge circuit is further configured to determine a number of cumulated cycles, based on a state of charge of the battery.

10. The aerosol generating device of 9, wherein the charge circuit is further configured to adjust at least one of the full charge voltage and a charge current when charging the battery, according to control by the processor.

11. The aerosol generating device of claim 2, wherein the processor is further configured to set the full charge voltage to a second voltage that is lower than the first voltage when the number of cumulated cycles is greater than a second threshold cycle number, which is greater than the first threshold cycle number.

12. A control method for an aerosol generating device, the control method comprising:
monitoring charge-discharge cycles of a battery; and
controlling a full charge voltage when charging the battery and an output of the battery, based on the charge-discharge cycles.

13. The control method of claim 12, further comprising:
determining charge of 100 % and discharge of 100 % as one cycle, based on a state of charge (SOC) of the battery; and
setting the full charge voltage to a first voltage that is lower than an initial full charge voltage when a number of cumulated cycles is greater than a first threshold cycle number.

14. The control method of claim 13, wherein the first threshold cycle number is less than a number of charge-discharge cycles preset by a manufacturer to guarantee performance of the battery.

15. A non-transitory recording medium having recorded thereon a program for executing, on a computer, the control method for the aerosol generating device, according to claim 12.
